# EUROPEAN PATENT SPECIFICATION

(11) **EP 2 854 247 B1**
(45) Date of publication and mention of the grant of the patent: **28.12.2016**
(21) Application number: 14178260.7
(22) Date of filing: 24.07.2014
(51) Int. Cl.: H01R 13/523, H01R 43/00, H02G 15/10, H02G 15/184, H01B 13/06, H01B 7/00, H01B 7/02, H01B 7/17

(54) **Method for manufacturing a conductor part**
Herstellungsverfahren für ein Leiterteil
Procédé de fabrication d'une pièce de conducteur

(30) Priority: 27.09.2013 EP 13186407
(43) Date of publication of application: 01.04.2015
(73) Proprietor: Siemens Aktiengesellschaft, 80333 München (DE)
(72) Inventor: Burrow, Christopher, Ulverston, Cumbria LA12 9DD (GB); Chana, Paul, Wrexham, Cheshire LL12 8DH (GB); Jones, Trevor, Kendal, Cumbria LA9 4LX (GB); Plant, Christopher, Lancaster, Lancashire LA1 4EE (GB)

(56) References cited:
- EP-A1- 1 870 975
- EP-A1- 2 197 080
- GB-A- 1 177 915
- US-A1- 2003 134 538

## Description

### Field of invention

The present invention relates to a method for manufacturing a conductor part in for a connector unit, wherein the conductor part comprises a conductive core, an insulating sleeve and at least a first conductive layer arranged between the conductive core and the insulating sleeve and to a conductor part manufactured according to the aforementioned method.

### Art Background

In the near future an increasing demands of communication over wide distances, especially for example between continents will be needed. Hence, infrastructures, like sea cables and connectors linking sea cables and modules, e.g. subsea modules, like transformers, pumps etc., that are located and operated error proof subsea will be essential. Partial discharge at higher AC voltages between a conductor and an insulator in typical connectors and penetrators is a long term reliability problem. In a connector/penetrator the insulation is typically formed by over moulding the conductor or assembling an insulator sleeve or layer over the conductor. In these methods, it is either not possible and/or not easy and requires careful design of the process and a conductive core to completely eliminate the air void between conductor and insulator, and the air void is a source for partial discharge phenomenon. For example, there is a gap between the conductor and insulator when a pre-formed sleeve is engaged over the conductor. There is also difficulty in over moulding a polymer insulation onto a metal substrate and achieving a consistently bonded interface. Typically, air voids are formed at the interface due to shrinkage of the polymer during processing and coefficient of thermal expansion differences between the materials. Since air is a poor insulator when compared with typical high voltage insulations, the electrical potential (voltage) will over-stress these air voids. As the air ionizes the result is partial discharges. The resulting damage will eventually lead to a dielectric failure of the insulation.

It is for example known to directly mould a conductor pin insulation onto a conductive core. This is e.g. possible with Epoxy. These moulded pins can then be plated to provide an outer conductive layer in intimate contact with the insulation.

It is a first objective of the present invention to provide a method for manufacturing a conductor part for a connector unit that provides an electrically unstressed interface between insulating parts, like an insulation, and electrical components, like a conductive core, of the conductor part. Consequently, the conductor part may be reliable and less insusceptible to errors, in comparison to stat of the art systems.

It is a further objective of the present invention to provide a conductor part that is failure proof and reliable. These objectives may be solved by a connection unit and methods according to the subject-matter of the independent claims. EP2197080 discloses a flexible joint with resistive field grading material for HVDC cables.
US2003/0134538 discloses a semiconductive coating for shielded cable accessories.

### Summary of the Invention

According to a first aspect of the present invention, a method for manufacturing a conductor part for a connector unit, especially for a use in a subsea application, wherein the conductor part comprises a conductive core, an insulating sleeve and at least a first conductive layer arranged between the conductive core and the insulating sleeve is provided.

It is proposed, that the method comprises at least the following steps, wherein the first two steps may be reversed: Equipping at least one section of a radially inner surface of the insulating sleeve with the first conductive layer; Equipping at least one section of a radially outer surface of the insulating sleeve with at least a second conductive layer, wherein the second conductive layer is a metal layer and the equipping step is one of plating, spraying, vapour deposition, or sputtering, of the metal layer of the second conductive layer (28) onto the section of the outer surface of the insulating sleeve; inserting the conducting core in the insulating sleeve before or after an equipping step of a surface of the insulating sleeve with a conductive layer.

The step of equipping with the first conductive layer may be one of plating, spraying, vapour deposition, or sputtering of the first conductive layer on the section of the inner surface of the insulating sleeve.

Due to the inventive matter, an interface between the insulating sleeve of the conductor part and either the high voltage and earth is in intimate contact with each other. Thus, the interface is free of air entrapment or contamination or void free or air tight, which could have lower breakdown strength than the insulation. Hence, a risk for partial discharge is minimised providing a reliable conductor part. Moreover, by using the inventive method, the insulation of the conductor part may be placed under greater electrical stress in comparison with state of the art systems. It also has advantages in terms of preventing the stress diverging into places where it may have detrimental effects. Thus, electrical stress is no longer a consideration during the design of current carrying components. Since an interface be tween the current carrying components and the first/second conductive layer on the inside of the insulating sleeve/shell is now under no electrical stress, conductive parts, especially the conductive core, can have any shape suitable for a person skilled in the art. Hence, a system with less electrical issues, compared with state of the art systems, may advantageously be provided. Furthermore, by using a selected metal layer or a conductive plastic layer a corrosion resistance may be provided, which is especially beneficial in a wet environment.

Even if the terms "conductive layer, section, metal layer, plastic layer, radial space, mediator layer and connected part" (see also below) are used in the singular or in a specific numeral form in the claims and the specification the scope of the patent (application) should not be restricted to the singular or the specific numeral form. It should also lie in the scope of the invention to have more than one or a plurality of the above mentioned structure(s).

A connector unit is intended to mean a unit which physically connects at least two parts, like two cables, preferably subsea cables, or a cable with a - subsea - module (e.g. a transformer, a pump etc.) or a busbar inside of the module or two modules, respectively. Thus, it is preferably a subsea connector unit. The connector unit may be used in any harsh environment and may be embodied as an electrical connector and/or penetrator or preferably as a wet mateable connector/penetrator. Moreover, it is preferably employed in a high voltage application.

Such a connector unit comprises at least a conductor part that helps to establish an electrical connection in a mated position of two connected parts, like two cables or a cable with a module. This conductor part may be a conductor pin, receptacle pin or male part of a connector or of a penetrator or a socket contact of a female part, plug or socket or connector body of a connector for contacting a conductor pin of a male part. Furthermore, the female socket is intended to mean a part of the connector unit with an opening, recess or bore to receive another part of the connector unit, like the conductor pin or parts thereof. Moreover, in case of an embodiment of the connector unit as comprising a penetrator the conductor pin is permanently connected to a cable or a module via a housing. Thus, the conductor pin is intended to mean a part of the unit with a pin, extension or the like to engage or being inserted in the opening of the female socket or the cable or the module. The conductor pin and its corresponding part (female socket, cable or module) are intended to establish an electrical connection either in case of mating of the male and female parts or a permanent connection of the conductor pin with the cable or module. The female and male parts or the module each may be encased in a casing or an external of a cable.

The insulating sleeve is preferably a cylindrical tube, which may have a homogenous, a stepped or a tapered inner and/or outer contour. The inner and/or outer surfaces of the sleeve are preferably skin surfaces or parts thereof. The term "equipping" should be understood as "providing and/or fitting". For the equipping step any method feasible for a person skilled in the art could be used, like plating, spraying, vapour deposition, sputtering etc. The wording "equipping at least one section of a surface of the insulating sleeve" should be understood as that the surface is at least partially equipped with a conductive layer. The section has preferably a homogenous or uniformly contour, like a homogenous diameter. The wording "before or after equipping the outer surface with the second conductive layer" means that the sequence of the last two steps claimed in the method may be reversed.

Furthermore, it is provided that the second equipping step is a plating of the metal layer of the second conductive layer onto the section of the outer surface of the insulating sleeve. Thus, the intimate interface between the insulation and the conductive layer may be provided constructively easy and reliably. Preferably, the second equipping step is a chemical plating process. According to an alternative embodiment the second equipping step is a spraying of the second conductive layer onto the section of the outer surface of the insulating sleeve. Hence, a corrosion resistance layer may be applied homogeneously and quick. Preferably, the second equipping step is a plasma spray depositing process.

It is further provided, that the first equipping step is a plating, especially, a chemical plating process, of the first conductive layer on the section of the inner surface of the sleeve. Consequently, the conductive layer may be applied with good results. In an alternative embodiment it is provided, that the first equipping step is a spraying, especially a plasma spray depositing process, of the first conductive layer onto the section of the inner surface of the insulating sleeve. As a result, a corrosion resistance layer may be applied homogeneously and quick. Moreover, the first conductive layer is at least one layer selected out of the group consisting of a metal layer or a conductive plastic layer. Hence, materials with good conductive properties can be deployed.

In a preferred embodiment the method further comprises at least the step of: Filling at least a radial space between the conductive core and the first conductive layer at the inner surface of the insulating sleeve with at least a mediator layer and/or a mediator material. By selecting a suitable mediator, mediator layer or mediator material characteristics of an interaction between the conductive core and the first conductive layer may be selectively chosen.

Preferably the mediator layer has a thermally and/or electrically conductive property. Thus, an intimate interface between the conductive core and the first conductive layer or the metal/conductive plastic layer, respectively, may be omitted. In other words, the conductive core doesn't have to be in intimate contact with the first conductive layer or the metal/conductive plastic layer, respectively. A sufficient contact between the conductive core and the first conductive layer may be established if the mediator layer has a material that is selected out of the group consisting of a grease or an adhesive. This may e.g. be silicones, like ACC Silicones SG500 or Sylgard 170.

For example, the mediator layer may be a combination out of a mediator (assembly) and a mediator material, wherein one provides a thermal interface and the other the electrical interface. Advantageously, the thermal interface is provided by a thermally conductive mediator material, like a grease or an adhesive. This thermally conductive mediator material is an alternative feature because it is unrequired for the electrical performance and is only required to provide thermal conduction and mechanical support to the insulator. A spring loaded contact, like a spring loaded plunger (metal cap with a spring behind it), is provided to mediate the electrical connection between the core and the conductive layer and represents a mediator (assembly). By using a spring for the electrical contact unhomogeneous thermal expansion and shrinking of pieces out of different materials can be compensated easily. It is further possible, to have a mediator layer having both - electrically and thermally conductive - properties. This could save mounting efforts and costs.

According to an alternative embodiment of the method the first equipping step is a connecting of the first conductive layer to the section of the inner surface of the insulating sleeve by an interference fit and/or interference fit tubing. Hence, a tight and secure connection may be provided. The interference fit may be established by any method feasible for a person skilled in the art, like application of force and/or of thermal expansion or contraction. Application of force may be applied by pushing a tube out of a conductive material or provided with a conductive layer at its inner surface into an inner diameter of the insulating sleeve, wherein the inner diameter of the insulating sleeve is only slightly wider than an outer diameter of the (conductive) inserted tube. Thus, the interference fit is a press fit in this case.

In a preferred embodiment of the invention the method comprises at least the following pre-steps: Heating the insulating sleeve so that its (at least the inner) diameter expands; Inserting a tube out of a conductive material (or at last with a layer out of a conductive material at its inner surface) into the expanded diameter of the insulating sleeve; and connecting the insulating sleeve to the tube by means of cooling down of the heated insulating sleeve, thus providing a fixed connection between the tube and the insulating sleeve, wherein the tube represents the first conductive layer. As a result, an especially secure and intimate contact between the insulating sleeve and the first conducting layer and/or a tight fit of the insulating sleeve onto the conductive layer (tube) can be established. The insulating sleeve may be heated up to a temperature of about 140°C preferably to a temperature of about 120°C.

The pre-steps provide a heat-shrinking of the insulating sleeve on the tube out of conductive material. The tube out of conductive material - a conductive tube - is during the insertion into the insulating sleeve for example colder than the heated insulating sleeve or cold and unheated and may have approximately room temperature (approx. 20°C). An even tighter fit between the insulating sleeve and the first conductive layer/tube may be provided, when the inner tube is cooled in a pre-cooling step beforehand of the insertion of the tube into the heated sleeve. The tube may be cooled down to a temperature of about -40°C or higher. Moreover, the tube has beforehand and after the heat shrinking and the optional pre-cooling step basically the same diameter, wherein in the scope of a diameter as "basically the same" should also lie a divergence of the diameter before shrinking and the diameter after shrinking of about 10%. Preferably, the diameter before shrinking and the diameter after shrinking are the same. The term "fixed connection" is intended to mean an intimate, void free and/or air free connection or interface. Further, "represent" should be understood as "provide, is or function as".

According to a further and alternative method according to the invention the method may omit the step of the second equipping step (equipping the at least one section of a radially outer surface of the insulating sleeve with at least a second conductive layer, wherein the second conductive layer is at least one metal layer). This method sequence would further comprise the step of inserting the conducting core in the insulating sleeve.

In a further realisation of the invention the method further comprises at least the step of: Providing at least a second section of the radially inner surface of the insulating sleeve with at least one further conductive layer, wherein the further conductive layer is preferably a metal layer. Hence, for example sections with contours that differ from a contour of the first section of the insulating sleeve may be also provided with a suitable interface to the insulating sleeve. Moreover, an acceptable and sufficient electrical interface with tapers or square shoulders that interface with the copper core pin at each end of the first section of the inner surface of the insulating sleeve may be provided. The metal layer may be plated, or the conductive layer may be applied by spray deposition onto the further section of the inner surface of the insulating sleeve. In general it may also be a conductive plastic layer.

According to a further aspect of the present invention, a conductor part of a connector unit, for connecting at least two connected parts, like a cable or module, preferably a subsea cable or module, fabricated according to the inventive method is presented, wherein as stated above the conductor part comprises the conductive core, the insulating sleeve and at least the first conductive layer arranged between the conductive core and the insulating sleeve, wherein the first conductive layer is arranged at at least one section of the inner surface of the insulating sleeve. It is provided that the conductor part comprises at least a second conductive layer arranged at at least one section of the outer surface of the insulating sleeve and characterised in that the second conductive layer is metal plated, or sprayed, or vapour deposed, or sputtered metal layer.

Due to the inventive matter, an interface between the insulating sleeve of the conductor part and either the high voltage and earth is in intimate contact with each other. Thus, the interface is free of air entrapment or contamination or void free or air tight, which could have a lower breakdown strength than the insulation. Hence, a risk for partial discharge is minimised providing a reliable conductor part. Moreover, by using the inventive method, the insulation of the conductor part may be placed under greater electrical stress in comparison with state of the art systems. It also has advantages in terms of preventing the stress diverging into places where it may have detrimental effects. Thus, electrical stress is no longer a consideration during the design of current carrying components. Since an interface between the current carrying components and the first/second conductive layer on the inside of the insulating sleeve/shell is now under no electrical stress, conductive parts, especially the conductive core, can have any shape suitable for a person skilled in the art. Hence, a system with less electrical issues, compared with state of the art systems, may advantageously be provided. Furthermore, by using a selected metal layer or a conductive plastic layer a corrosion resistance may be provided, which is especially beneficial in a wet environment.

The wording that the conductive layer "is arranged at" at least one section of an inner/outer surface should be understood as "is connected to and/or built with".

Preferably, the first conductive layer is a metal layer and/or a conductive plastic layer, thus a material with good conductive properties may be used.

In an alternative embodiment of the invention the first conductive layer has the same base material as the insulating sleeve. Hence, a connection between the first conductive layer and the insulating sleeve will be advantageously easy and may provide a good electrical interface. In this context a base material is intended to mean a material that is the main component of the part. That material may define a main property or function of a part, like an isolating function, or it may provide an auxiliary function, like a moulding, stabilising or handling function. This function may be different for the insulating sleeve and the conductive layer. The base material may be any material feasible for a person skilled in the art and be for example a plastic material e.g. out of the polyaryletherketone (PAEK) family, Epoxy family or the polyamide family (e.g. Nylon).

Alternatively, it may be possible to use an insulating sleeve and a first conductive layer with different base materials, but with thermally compatible materials. These materials would preferably be two plastic materials, like PEEK and Nylon.

It is further provided, that the first conductive layer is a layer out of a material selected out of the group consisting of a polymer material or a thermoset polymer material The polymer material may be any material feasible for a person skilled in the art, like an engineering plastic or a material out of the PAEK family or Epoxy family or polyamide family, preferably, polyether ether ketone (PEEK). Moreover, thermoset polymer material could be any material feasible for a person skilled in the art, e.g. an epoxy material or the like. Preferably, the insulating sleeve is fabricated out of insulative PEEK and the first conductive layer is fabricated out of conductive PEEK. Conductive PEEK is, for example, loaded with carbon nanotubes or carbon fibre filler until the resistance of the PEEK reduced to a needed amount.

In an advantageously embodiment of the invention the radially inner surface of the insulating sleeve comprises at least a second section, wherein the second section comprises at least one further conductive layer, wherein the further conductive layer is preferably a metal layer. In other words the second section may be metal plated. Hence, for example sections with contours that differ from a contour of the first section of the insulating sleeve may be also provided with a suitable interface to the insulating sleeve. Moreover, an acceptable and sufficient electrical interface e.g. with a taper or a square shoulder at each end of the first section of the inner surface of the insulating sleeve may be provided.

An effective conductive layer and thus connection to the insulating sleeve may be gained when the first and the second conductive layers have a thickness between 1 micrometre (µm) and 20 millimetre (mm), preferably between 5 µm and 15 mm and most preferably between 10 µm and 10 mm. Experimentally, it has been shown that the following ranges were beneficial for the conductive properties of the first and the second conductive layers. In case of a metal layer the first and the second conductive layers have a thickness between 1 µm and 40 µm, preferably between 5 µm and 35 µm and most preferably between 10 µm and 30 µm. Further, in case of a conductive plastic layer the first and the second conductive layers have a thickness between 1 mm and 20 mm, preferably between 1.5 mm and 10 mm and most preferably between 2 mm and 5 mm.

According to a further aspect of the present invention the metal layer has a metal selected out of the group consisting of copper, a copper alloy, aluminum, nickel-cobalt ferrous alloy (e.g. Kovar(R)), molybdenum, titanium and (phosphorous) nickel. Thus, a material with convincing and well-proven properties can be used. Moreover, the metal layer may be arranged on a base layer, e.g. high phosphorous nickel on top of a copper base layer. Thus, the metal layer may comprise more than one layer. Preferably, the metal layer comprises titanium or (phosphorous) nickel the latter disposed on a base layer out of copper. By using e.g. titanium a desired corrosion resistance may advantageously be provided.

In an advantageously embodiment of the invention the conductive core, preferably a solid core, has a material selected out of the group consisting of metals such as copper, a copper alloy, aluminum, a nickel-cobalt ferrous alloy (e.g. Kovar(R)) and molybdenum. Hence, the usage of a reliable material is ensured.

Furthermore, by using the inventive method or the realisation that metal plating, interference fit tubing or a combination of both can be used the same advantages as a triple extrusion or over-moulding can be achieved.

The above-described characteristics, features and advantages of this invention and the manner in which they are achieved are clear and clearly understood in connection with the following description of exemplary embodiments which are explained in connection with the drawings.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- FIG 1:: shows schematically a subsea connector unit with an inventive conductor pin and a female socket before-hand of mating,
- FIG 2:: shows schematically the subsea connector unit from FIG 1 in a mated position,
- FIG 3:: shows a front view of the conductor pin of FIG 1,
- FIG 4:: shows a section along line IV-IV through the illustration of the conductor pin of FIG 3,
- FIG 5: shows a section through a first alternative embodiment of the conductor pin and
- FIG 6:: shows a section through a second alternative embodiment of the conductor pin.

### Detailed Description

The illustrations in the drawings are schematically. It is noted that in different figures, similar or identical elements are provided with the same reference signs.

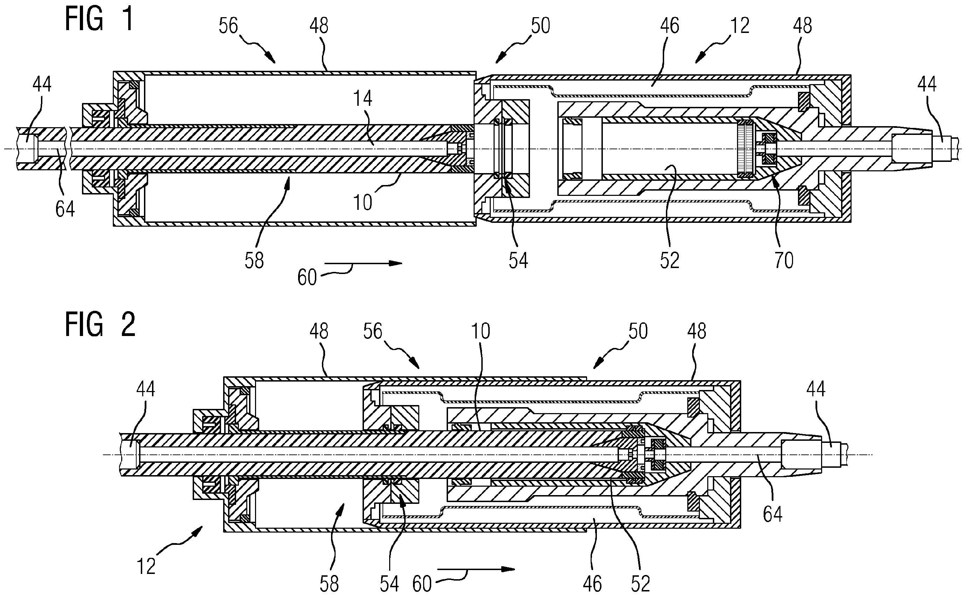

FIG 1 shows an inventive high voltage subsea connector unit 12 for connecting two connected parts 44, like two subsea cables 44, wherein the connector unit 12 comprises a conductor part 10 or conductor pin/male part and a female socket 46 or part (of the cables 44 only connecting regions are illustrated). Both the conductor part/pin 10 and the female socket 46 are each encased in a housing 48, which will be axially aligned during a mating or demating process of the conductor part/pin 10 and female socket 46. The female socket 46 is located at a plug front end 50 of one subsea cable 44 and comprises an axially extending bore 52 with seals 54 for preventing entering of dirt into internals of the female socket 46. The conductor part/pin 10 is located at a receptacle front end 56 of the other subsea cable 44 and comprises a receptacle pin assembly 58.

For a mating of the conductor part/pin 10 and female socket 46 the bore 52 and the receptacle pin assembly 58 will be arranged axially aligned towards each other, so that by moving the receptacle pin assembly 58 in direction of the female socket 46 or the moving direction 60, the receptacle pin assembly 58 can partially enter the bore 52 of the female socket 46. Due to a proper positioning of the receptacle pin assembly 58 in the bore 52 of the female socket 46 an electrical connection is established between the conductor part/pin 10 and a socket contact 70. This mating position is schematically shown in FIG 2.

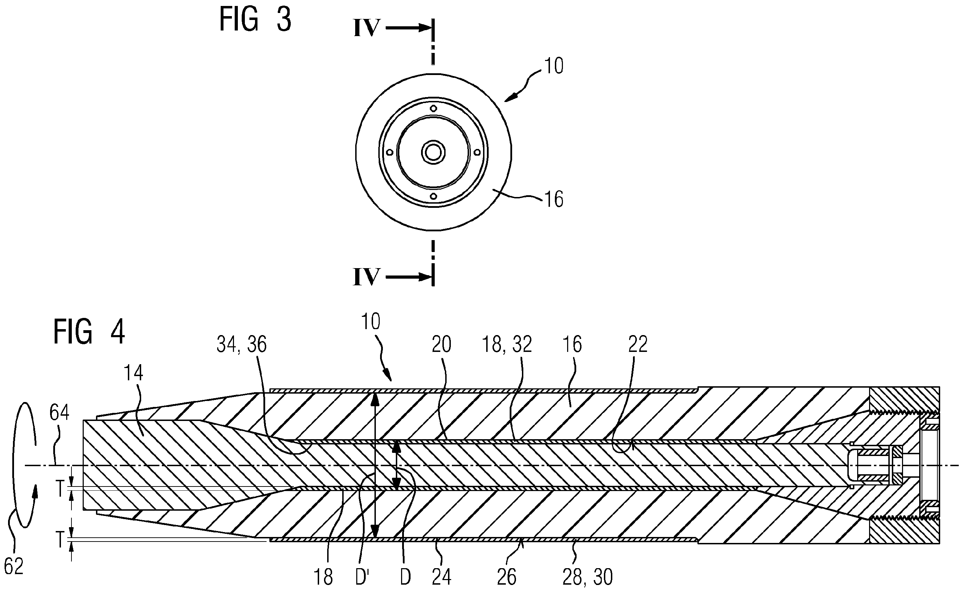

FIG 3 shows a front view of the conductor part/pin 10 in the form of a male conductor pin and FIG 4 a section along line IV-IV in FIG 3. The conductor part/pin 10 comprises a conductive core 14 out of copper and an insulating sleeve 16 out of, for example, insulative polyether ether ketone (PEEK). Generally, a different PAEK or glass filled PEEK may be used. The insulating sleeve 16 is arranged in circumferential direction 62 around the conductive core 14. Arranged between the conductive core 14 and the insulating sleeve 16 the conductor part 10 comprises further a first conductive layer 18.

This first conductive layer 18 is arranged at a section 20 of an inner surface 22 of the insulating sleeve 16. The section 20 is a portion of the insulating sleeve 16 having a homogeneous inner diameter D, wherein the inner surface 22 is a skin surface of the sleeve 16 that extends parallel to an axis 64 of the conductive core 14. The conductive layer 18 is a metal layer 32 out of, for example, titanium or high phosphorous nickel on top of a copper base layer. Generally, it would be also possible to provide a conductive plastic layer as conductive layer 18 (not shown).

A radial space 34 between the conductive core 14 and the first conductor layer 18 at the inner surface 22 is filled with a mediator layer 36. The mediator layer 36, for example, comprises a thermally conductive mediator material, like a grease or an adhesive e.g. Sylgard 170, to provide thermal conduction and mechanical support to the insulating sleeve 16. An electrical interface between the conductive core 14 and the first conductive layer 18 is provided by mediator assembly in the form of a spring loaded contact, like a spring loaded plunger (metal cap with a spring behind it) (not shown in detail).

Furthermore, the conductor part/pin 10 comprises a second conductive layer 28 that is arranged at a section 24 of an outer surface 26 of the insulating sleeve 16. The section 24 is a portion of the insulating sleeve 16 having a homogeneous outer diameter D', wherein the inner surface 24 is a skin surface of the sleeve 16 that extends parallel to the axis 64 of the conductive core 14 and to the inner surface 22. The conductive layer 28 is also a metal layer 30 out of, for example, titanium or high phosphorous nickel on top of a copper base layer.

Both conductive layers 18, 28 or metal layers 30, 32, respectively, have a thickness T between 1 µm to 30 µm and preferably of about 25 µm. A conductive plastic layer would have a thickness of about 2 mm to 5 mm (not shown).

A manufacturing sequence of the conductor part 10 starts with a piece of machined tube-shaped PEEK as the insulating sleeve 16 and is as follows:
Firstly, section 20 of the radially inner surface 22 of the insulating sleeve 16 is equipped by metal plating with the first conductive copper layer 18. Thereafter, section 24 of the radially outer surface 26 of the insulating sleeve 16 is equipped by metal plating with the second conductive copper layer 28. In general, it would be also possible to provide a conductive layer by spray coating for both conductive layers 18, 28 or a conductive plastic layer by vapour deposition for the outer conductive layer 28 (not shown). Subsequently, the conducting core 14 is inserted in the insulating sleeve 16. Finally, the radial space 34 between the conductive core 14 and the first conductive layer 18 at the inner surface 22 is filled with the mediator layer 36 with thermally and electrically conductive properties to provide an interface between the core 14 and layer 18. Since, an intimate contact between the conductive core 14 and the first conductive layer 18 is unnecessary, the core 14 can be mechanically "rough" or needn't to have a specially selected and/or machined shape.

Alternatively, the sequence may start with the metal plating (or spray coating) of the outer surface 26 of the insulating sleeve 16 followed by the metal plating (or spray coating) of the inner surface 22 of the insulting sleeve 16. Moreover, it may also be possible to insert the conductive core 14 after the plating (or spray coating) of the inner surface 22 and beforehand of the plating of the outer surface 26.

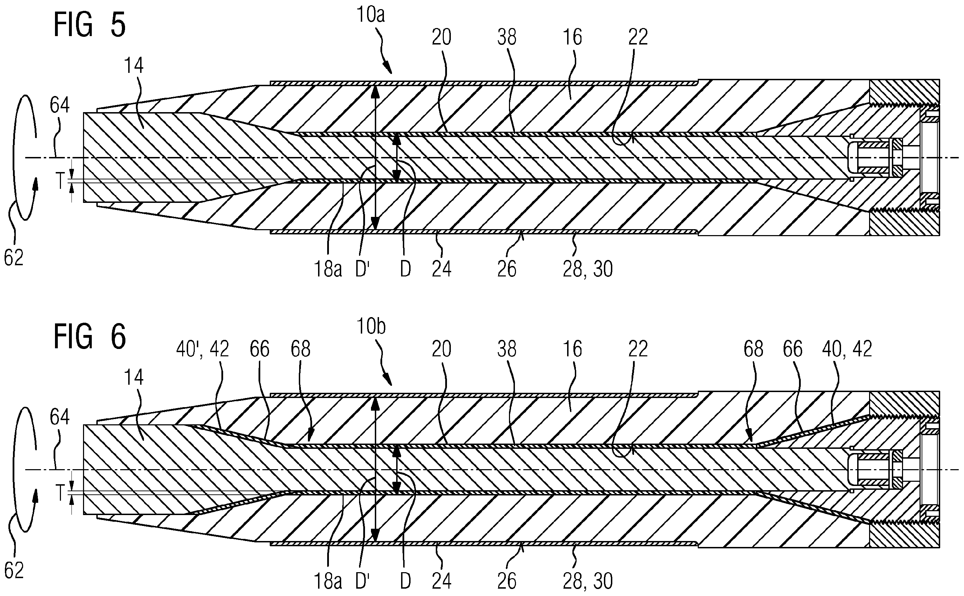

FIG 5 and 6 show two alternative exemplary embodiments of the conductor part/pin 10. Identical components, features and functions are denoted by the same reference numerals. However, to distinguish the exemplary embodiment of FIG 5 and 6 over that of FIG 1 to 4 the letters 'a' and 'b' have been added to the reference numerals of the components that are designed differently in the exemplary embodiment of FIG 5 and 6. The description below is substantially limited to these differences compared to the exemplary embodiment of FIG 1 to 4, wherein reference is made to the description of the exemplary embodiment in FIG 1 to 4 with respect to identical components, features, and functions.

FIG 5 shows a first alternative embodiment of the conductor part/pin 10. The conductor part/pin 10a of FIG 5 differs from the conductor part/pin 10 of FIG 1 to 4 in the embodiment of the first conductive layer 18a. First conductive layer 18a has the same base material as the insulating sleeve 16 and thus is fabricated out of PEEK. Contradictory to the insulative PEEK of the insulating sleeve 16 the PEEK of the first conductive layer 18a is a conductive PEEK. Further, the first conductive layer 18a has a thickness T of for example between 2 mm and 5 mm. The insulating sleeve 16 and the first conductive layer 18a are connected by an interference fit or interference fit tubing.

A manufacturing sequence of the conductor part 10a is as follows:
Firstly, the insulating sleeve 16 is heated, so that its inner diameter D expands. Thereafter, a tube 38 out of conductive PEEK, that represents the first conductive layer 18a, is inserted into the expanded diameter D of the insulating sleeve 16 (not shown). The tube 38 has approximately room temperature. Additionally, it would be possible to cool the tube 38 in a pre-cooling step to approximately -40°C. When the hot piece of insulative PEEK of sleeve 16 has cooled down its expanded diameter D will return to its original diameter and it will be a tight fit onto the conductive PEEK of tube 38, with a good electrical interface. Hence, the cooling down of the heated insulating sleeve 16 results in a fixed connection between the tube 38 and the insulating sleeve 16.

Finally, a section 24 of a radially outer surface 26 of the insulating sleeve 16 is equipped by metal plating with a second conductive copper layer 28. In general, it would be also possible to provide a conductive layer by (plasma) spray coating for the outer conductive layer 28 (not shown). Subsequently, a machined conductive core 14 is inserted in the insulating sleeve 16. The sequence of the last two steps may be reversed.

In general, it would be also possible to omit the plating of the outer surface 26 of the insulating sleeve 16 (not shown).

FIG 6 shows a second alternative embodiment of the conductor part/pin 10a. The conductor part/pin 10b of FIG 6 differs from the conductor part/pin 10a of FIG 5 in that a radially inner surface 22 of an insulating sleeve 16 has further sections 40, 40', wherein each comprises a further conductive layer 42, embodied exemplarily as a metal layer 42. Sections 40, 40' are tapers 66 adjacent to axially ends 68 of section 20, wherein the further conductive (metal) layers 42 provide electrical contact to the first conductive layer 18a at section 20 of inner surface 22.

Alternatively and/or additionally, it would be possible to provide other or further sections with a conductive layer, like a square or stepped shoulder e.g. of the conductive core (not shown).

Thus, after heat shrinking of the insulating sleeve 16 on the first conductive layer 18a out of conductive PEEK and beforehand of the insertion of a conductive core 14 in the insulating sleeve 16 the sections 40, 40' are metal plated.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Method for manufacturing a conductor part (10, 10a, 10b) for a connector unit (12), especially for a use in a subsea application, wherein the conductor part (10, 10a, 10b) comprises a conductive core (14), an insulating sleeve (16) and at least a first conductive layer (18, 18a) arranged between the conductive core (14) and the insulating sleeve (16), wherein the method comprises at least the following steps, wherein the first two steps may be reversed:
- Equipping at least one section (20) of a radially inner surface (22) of the insulating sleeve (16) with the first conductive layer (18, 18a);
- Equipping at least one section (24) of a radially outer surface (26) of the insulating sleeve (16) with at least a second conductive layer (28), wherein the second conductive layer (28) is a metal layer (30) and the equipping step is one of plating, spraying, vapour deposition, or sputtering, of the metal layer (30) of the second conductive layer (28) onto the section (24) of the outer surface (26) of the insulating sleeve (16) ;
- Inserting the conducting core (14) in the insulating sleeve (16) before or after an equipping step of a surface (22, 26) of the insulating sleeve (16) with a conductive layer (18, 18a; 28).

2. Method according to claim 1,
wherein the first equipping step is a plating of the first conductive layer (18) on the section (20) of the inner surface (22) of the insulating sleeve (16) and/or wherein the first equipping step is a spraying of the first conductive layer (18) onto the section (20) of the inner surface (22) of the insulating sleeve (16) and/or wherein the first conductive layer (18, 18a) is at least one layer selected out of the group consisting of a metal layer (32) or a conductive plastic layer.

3. Method according to any one of the preceding claims, wherein the method further comprises at least the step of: Filling at least a radial space (34) between the conductive core (14) and the first conductive layer (18) at the inner surface (22) of the insulating sleeve (16) with at least a mediator layer (36), preferably the mediator layer (36) has a thermally and/or electrically conductive property, wherein the mediator layer (36) has a material selected out of the group consisting of a grease or an adhesive.

4. Method according to claim 1,
wherein the first equipping step is a connecting of the first conductive layer (18a) to the section (20) of the inner surface (22) of the insulating sleeve (16) by an interference fit.

5. Method according to claim 4,
wherein the method comprises at least the following pre-steps:
- Heating the insulating sleeve (16) so that its diameter (D) expands;
- Inserting a tube (38) out of a conductive material into the expanded diameter (D) of the insulating sleeve (16) ;
- Connecting the insulating sleeve (16) to the tube (38) by means of cooling down of the heated insulating sleeve (16), thus providing a fixed connection between the tube (38) and the insulating sleeve (16), wherein the tube (38) represents the first conductive layer (18a).

6. Method according to claims 4 or 5,
wherein the method further comprises at least the step of:
Providing at least a second section (40) of the radially inner surface (22) of the insulating sleeve (16) with at least one further conductive layer (42), in particular a metal layer.

7. Conductor part (10, 10a, 10b) of a connector unit (12), for connecting at least two connected parts (44), that is fabricated according to the method of at least one of the preceding method claims, wherein the conductor part (10, 10b, 10c) comprises a conductive core (14), an insulating sleeve (16) and at least a first conductive layer (18, 18a) arranged between the conductive core (14) and the insulating sleeve (16), wherein the first conductive layer (18, 18a) is arranged at at least one section (20) of an inner surface (22) of the insulating sleeve (16), wherein the conductor part (10, 10a, 10b) comprises at least a second conductive layer (28) arranged at at least one section (24) of an outer surface (26) of the insulating sleeve (16) and **characterised in that** the second conductive layer (28) is a metal plated, or sprayed, or vapour deposed, or sputtered metal layer (30).

8. Conductor part according to claim 7,
wherein the first conductive layer (18) is a metal layer (32) and/or a conductive plastic layer.

9. Conductor part according to claim 7,
wherein the first conductive layer (18a) has the same base material as the insulating sleeve (16).

10. Conductor part according to claim 9,
wherein the first conductive layer (18a) is a layer out of a material selected out of the group consisting of a polymer material or a thermoset polymer material.

11. Conductor part according to claim 9 or 10,
wherein the radially inner surface (22) of the insulating sleeve (16) comprises at least a second section (40), wherein the second section (40) comprises at least one further conductive layer (42), wherein the further conductive layer (42) is a metal layer.

12. Conductor part according to any one of claims 7 to 11, wherein the first and the second conductive layers (18, 18a; 28) have a thickness (T) between 1 µm and 20 mm, preferably between 5 µm and 15 mm and most preferably between 10 µm and 10 mm and/or wherein in case of a metal layer (30, 32, 42) the first and the second conductive layers (18, 18a; 28) have a thickness (T) between 1 µm and 40 µm, preferably between 5 µm and 35 µm and most preferably between 10 µm and 30 µm, and/or wherein in case of a conductive plastic layer (18a) the first conductive layer (18, 18a; 28) a thickness (T) between 1 mm and 20 mm, preferably between 1.5 mm and 10 mm and most preferably between 2 mm and 5 mm.

13. Conductor part according to any one of claims 7 to 12, wherein the metal layer (30, 32, 42) has a metal selected out of the group consisting of copper, a copper alloy, an aluminum, a nickel-cobalt ferrous alloy, molybdenum, titanium and nickel.

14. Conductor part according to any one of claims 7 to 13, wherein the conductive core (14) has a material selected out of the group consisting of metals such as copper, a copper alloy, aluminum, a nickel-cobalt ferrous alloy and molybdenum.

15. A method according to claim 1, wherein the step of equipping with the first conductive layer is one of plating, spraying, vapour deposition, or sputtering of the first conductive layer (18) on the section (20) of the inner surface (22) of the insulating sleeve (16).

## Patentansprüche

1. Verfahren zur Herstellung eines Leiterteils (10, 10a, 10b) für eine Leitereinheit (12), insbesondere zur Verwendung bei einer Unterwasseranwendung, wobei das Leiterteil (10, 10a, 10b) einen leitfähigen Kern (14), eine Isolierhülse (16) und wenigstens eine erste leitfähige Schicht (18, 18a), die zwischen dem leitfähigen Kern (14) und der Isolierhülse (16) angeordnet ist, umfasst,
wobei das Verfahren wenigstens die folgenden Schritte umfasst, wobei die ersten beiden Schritte vertauscht werden können:
- Ausstatten wenigstens eines Abschnitts (20) einer radial inneren Fläche (22) der Isolierhülse (16) mit der ersten leitfähigen Schicht (18, 18a);
- Ausstatten wenigstens eines Abschnitts (24) einer radial äußeren Fläche (26) der Isolierhülse (16) mit wenigstens einer zweiten leitfähigen Schicht (28), wobei die zweite leitfähige Schicht (28) eine Metallschicht (30) ist und der Schritt des Ausstattens ein Schritt des Plattierens, des Aufspritzen, der Dampfabscheidung oder des Aufsputterns der Metallschicht (30) der zweiten leitfähigen Schicht (28) auf den Abschnitt (24) der äußeren Fläche (26) der Isolierhülse (16) ist;
- Einsetzen des leitfähigen Kerns (14) in die Isolierhülse (16) vor oder nach einem Schritt des Ausstattens einer Fläche (22, 26) der Isolierhülse (16) mit einer leitfähigen Schicht (18, 18a; 28).

2. Verfahren nach Anspruch 1,
wobei der erste Schritt des Ausstattens ein Plattieren der ersten leitfähigen Schicht (18) des Abschnitts (20) der inneren Fläche (22) der Isolierhülse (16) ist, und/oder wobei der erste Schritt des Ausstattens ein Aufspritzen der ersten leitfähigen Schicht (18) auf den Abschnitt (20) der inneren Fläche (22) der Isolierhülse (16) ist, und/oder wobei die erste leitfähige Schicht (18, 18a) wenigstens eine Schicht ist, die aus der Gruppe ausgewählt ist, die aus einer Metallschicht (32) und einer leitfähigen Kunststoffschicht besteht.

3. Verfahren nach einem der vorhergehenden Ansprüche, wobei das Verfahren ferner wenigstens den folgenden Schritt umfasst:
Füllen wenigstens eines radialen Raumes (34) zwischen dem leitfähigen Kern (14) und der ersten leitfähigen Schicht (18) an der inneren Fläche (22) der Isolierhülse (16) mit wenigstens einer Vermittlerschicht (36), wobei die Vermittlerschicht (36) vorzugsweise eine wärmeleitende und/oder elektrisch leitende Eigenschaft aufweist, wobei die Vermittlerschicht (36) ein Material aufweist, das aus der Gruppe ausgewählt ist, die aus einem Schmierfett und einem Klebstoff besteht.

4. Verfahren nach Anspruch 1,
wobei der erste Schritt des Ausstattens ein Verbinden der ersten leitfähigen Schicht (18a) mit dem Abschnitt (20) der inneren Fläche (22) der Isolierhülse (16) durch eine Presspassung ist.

5. Verfahren nach Anspruch 4,
wobei das Verfahren wenigstens die folgenden vorangehenden Schritte umfasst:
- Erwärmen der Isolierhülse (16), sodass sich ihr Durchmesser (D) aufweitet;
- Einsetzen eines Rohres (38) aus einem leitfähigen Material in den aufgeweiteten Durchmesser (D) der Isolierhülse (16);
- Verbinden der Isolierhülse (16) mit dem Rohr (38) mittels Abkühlung der erwärmten Isolierhülse (16), wodurch eine feste Verbindung zwischen dem Rohr (38) und der Isolierhülse (16) gewährleistet wird, wobei das Rohr (38) die erste leitfähige Schicht (18a) darstellt.

6. Verfahren nach Anspruch 4 oder 5,
wobei das Verfahren ferner wenigstens den folgenden Schritt umfasst:
Versehen wenigstens eines zweiten Abschnitts (40) der radial inneren Fläche (22) der Isolierhülse (16) mit wenigstens einer weiteren leitfähigen Schicht (42), insbesondere einer Metallschicht.

7. Leiterteil (10, 10a, 10b) einer Leitereinheit (12) zum Verbinden wenigstens zweier verbundener Teile (44), welches gemäß dem Verfahren nach wenigstens einem der vorhergehenden Verfahrensansprüche hergestellt ist, wobei das Leiterteil (10, 10b, 10c) einen leitfähigen Kern (14), eine Isolierhülse (16) und wenigstens eine erste leitfähige Schicht (18, 18a), die zwischen dem leitfähigen Kern (14) und der Isolierhülse (16) angeordnet ist, umfasst, wobei die erste leitfähige Schicht (18, 18a) an wenigstens einem Abschnitt (20) einer inneren Fläche (22) der Isolierhülse (16) angeordnet ist, wobei das Leiterteil (10, 10a, 10b) wenigstens eine zweite leitfähige Schicht (28), die an wenigstens einem Abschnitt (24) einer äußeren Fläche (26) der Isolierhülse (16) angeordnet ist, umfasst, **dadurch gekennzeichnet, dass** die zweite leitfähige Schicht (28) eine durch Plattieren aufgebrachte oder aufgespritzte oder durch Dampfabscheidung aufgebrachte oder aufgesputterte Metallschicht (30) ist.

8. Leiterteil nach Anspruch 7,
wobei die erste leitfähige Schicht (18) eine Metallschicht (32) und/oder eine leitfähige Kunststoffschicht ist.

9. Leiterteil nach Anspruch 7,
wobei die erste leitfähige Schicht (18a) dasselbe Grundmaterial wie die Isolierhülse (16) aufweist.

10. Leiterteil nach Anspruch 9,
wobei die erste leitfähige Schicht (18a) eine Schicht aus einem Material ist, das aus der Gruppe ausgewählt ist, die aus einem Polymermaterial und einem warmausgehärteten Polymermaterial besteht.

11. Leiterteil nach Anspruch 9 oder 10,
wobei die radial innere Fläche (22) der Isolierhülse (16) wenigstens einen zweiten Abschnitt (40) umfasst, wobei der zweite Abschnitt (40) wenigstens eine weitere leitfähige Schicht (42) umfasst, wobei die weitere leitfähige Schicht (42) eine Metallschicht ist.

12. Leiterteil nach einem der Ansprüche 7 bis 11,
wobei die erste und die zweite leitfähige Schicht (18, 18a; 28) eine Dicke (T) zwischen 1 µm und 20 mm, vorzugsweise zwischen 5 µm und 15 mm und am stärksten bevorzugt zwischen 10 µm und 10 mm aufweisen, und/oder wobei im Falle einer Metallschicht (30, 32, 42) die erste und die zweite leitfähige Schicht (18, 18a; 28) eine Dicke (T) zwischen 1 µm und 40 µm, vorzugsweise zwischen 5 µm und 35 µm und am stärksten bevorzugt zwischen 10 µm und 30 µm aufweisen, und/oder wobei im Falle einer leitfähigen Kunststoffschicht (18a) die erste leitfähige Schicht (18, 18a; 28) eine Dicke (T) zwischen 1 mm und 20 mm, vorzugsweise zwischen 1,5 mm und 10 mm und am stärksten bevorzugt zwischen 2 mm und 5 mm aufweist.

13. Leiterteil nach einem der Ansprüche 7 bis 12,
wobei die Metallschicht (30, 32, 42) ein Metall aufweist, das aus der Gruppe ausgewählt ist, die aus Kupfer, einer Kupferlegierung, Aluminium, einer Eisen-Nickel-Cobalt-Legierung, Molybdän, Titan und Nickel besteht.

14. Leiterteil nach einem der Ansprüche 7 bis 13,
wobei der leitfähige Kern (14) ein Material aufweist, das aus der Gruppe ausgewählt ist, die aus Kupfer, einer Kupferlegierung, Aluminium, einer Eisen-Nickel-Cobalt-Legierung und Molybdän besteht.

15. Verfahren nach Anspruch 1, wobei der Schritt des Ausstattens mit der ersten leitfähigen Schicht ein Schritt des Plattierens, des Aufspritzen, der Dampfabscheidung oder des Aufsputterns der ersten leitfähigen Schicht (18) auf den Abschnitt (20) der inneren Fläche (22) der Isolierhülse (16) ist.

## Revendications

1. Procédé de fabrication d'une pièce formant conducteur (10, 10a, 10b) pour une unité formant connecteur (12), destinée plus spécialement à un usage dans une application sous-marine, étant entendu que la pièce formant conducteur (10, 10a, 10b) comprend une âme conductrice (14), une gaine isolante (16) et au moins une première couche conductrice (18, 18a) agencée entre l'âme conductrice (14) et la gaine isolante (16), le procédé comprenant au moins les étapes suivantes, étant entendu que les deux premières étapes peuvent être inversées :
- garnir au moins une section (20) d'une surface radialement interne (22) de la gaine isolante (16) au moyen de la première couche conductrice (18, 18a) ;
- garnir au moins une section (24) d'une surface radialement externe (26) de la gaine isolante (16) au moyen d'au moins une seconde couche conductrice (28), étant entendu que la seconde couche conductrice (28) est une couche métallique (30) et que l'étape de garniture est une étape consistant à appliquer par placage, projection, dépôt en phase vapeur ou pulvérisation cathodique, la couche métallique (30) de la seconde couche conductrice (28) sur la section (24) de la surface externe (26) de la gaine isolante (16) ;
- insérer l'âme conductrice (14) dans la gaine isolante (16) avant ou après une étape de garniture d'une surface (22, 26) de la gaine isolante (16) au moyen d'une couche conductrice (18, 18a ; 28).

2. Procédé selon la revendication 1,
dans lequel la première étape de garniture consiste en un placage de la première couche conductrice (18) sur la section (20) de la surface interne (22) de la gaine isolante (16) et/ou dans lequel la première étape de garniture consiste en une projection de la première couche conductrice (18) sur la section (20) de la surface interne (22) de la gaine isolante (16) et/ou dans lequel la première couche conductrice (18, 18a) est au moins une couche sélectionnée dans le groupe constitué d'une couche métallique (32) et d'une couche plastique conductrice.

3. Procédé selon l'une quelconque des revendications précédentes, étant entendu que le procédé comprend par ailleurs au moins l'étape consistant :
à remplir au moins un espace radial (34) entre l'âme conductrice (14) et la première couche conductrice (18) au niveau de la surface interne (22) de la gaine isolante (16) au moyen d'au moins une couche (36) de médiateur, la couche (36) de médiateur possédant de préférence une propriété de conduction thermique et/ou électrique, étant entendu que la couche (36) de médiateur comporte un matériau sélectionné dans le groupe constitué d'une graisse et d'une colle.

4. Procédé selon la revendication 1,
dans lequel la première étape de garniture consiste à raccorder la première couche conductrice (18a) à la section (20) de la surface interne (22) de la gaine isolante (16) par ajustement serré.

5. Procédé selon la revendication 4,
dans lequel le procédé comprend au moins les étapes préliminaires suivantes :
- chauffer la gaine isolante (16) de telle sorte que son diamètre (D) se dilate ;
- insérer un tube (38) en un matériau conducteur dans le diamètre (D) dilaté de la gaine isolante (16) ;
- raccorder la gaine isolante (16) au tube (38) au moyen d'un refroidissement de la gaine isolante (16) chauffée, ce qui assure un raccordement fixe entre le tube (38) et la gaine isolante (16), le tube (38) représentant la première couche conductrice (18a).

6. Procédé selon la revendication 4 ou 5,
étant entendu que le procédé comprend par ailleurs au moins l'étape consistant :
à garnir au moins une seconde section (40) de la surface radialement interne (22) de la gaine isolante (16) au moyen d'au moins une autre couche conductrice (42), en particulier une couche métallique.

7. Pièce formant conducteur (10, 10a, 10b) d'une unité formant connecteur (12), servant à raccorder au moins deux pièces raccordées (44), qui est fabriquée conformément au procédé selon au moins l'une des revendications de procédé précédentes, étant entendu que la pièce formant conducteur (10, 10b, 10c) comprend une âme conductrice (14), une gaine isolante (16) et au moins une première couche conductrice (18, 18a) agencée entre l'âme conductrice (14) et la gaine isolante (16), la première couche conductrice (18, 18a) étant agencée au moins au niveau d'une section (20) d'une surface interne (22) de la gaine isolante (16), la pièce formant conducteur (10, 10a, 10b) comprenant au moins une seconde couche conductrice (28) agencée au moins au niveau d'une section (24) d'une surface externe (26) de la gaine isolante (16) et étant **caractérisée en ce que** la seconde couche conductrice (28) est une couche métallique (30) obtenue par placage métallique ou par projection, ou par dépôt en phase vapeur ou par pulvérisation cathodique.

8. Pièce formant conducteur selon la revendication 7,
dans laquelle la première couche conductrice (18) est une couche métallique (32) et/ou une couche plastique conductrice.

9. Pièce formant conducteur selon la revendication 7,
dans laquelle la première couche conductrice (18a) comprend le même matériau de base que la gaine isolante (16).

10. Pièce formant conducteur selon la revendication 9,
dans laquelle la première couche conductrice (18a) est une couche en un matériau sélectionné dans le groupe constitué d'un matériau polymère et d'un matériau polymère thermodurci.

11. Pièce formant conducteur selon la revendication 9 ou 10, dans laquelle la surface radialement interne (22) de la gaine isolante (16) comprend au moins une seconde section (40), étant entendu que la seconde section (40) comprend au moins une autre couche conductrice (42), l'autre couche conductrice (42) étant une couche métallique.

12. Pièce formant conducteur selon l'une quelconque des revendications 7 à 11,
dans laquelle la première et la seconde couche conductrice (18, 18a ; 28) ont une épaisseur (T) comprise entre 1 µm et 20 mm, de préférence entre 5 µm et 15 mm, et, de façon particulièrement préférée, entre 10 µm et 10 mm, et/ou dans laquelle, dans le cas d'une couche métallique (30, 32, 42), la première et la seconde couche conductrice (18, 18a ; 28) ont une épaisseur (T) comprise entre 1 µm et 40 µm, de préférence entre 5 µm et 35 µm, et, de façon particulièrement préférée, entre 10 µm et 30 µm, et/ou dans lequel, dans le cas d'une couche plastique conductrice (18a), la première couche conductrice (18, 18a ; 28) a une épaisseur (T) comprise entre 1 mm et 20 mm, de préférence entre 1,5 mm et 10 mm, et, de façon particulièrement préférée, entre 2 mm et 5 mm.

13. Pièce formant conducteur selon l'une quelconque des revendications 7 à 12,
dans laquelle la couche métallique (30, 32, 42) comprend un métal sélectionné dans le groupe constitué du cuivre, d'un alliage de cuivre, de l'aluminium, d'un alliage ferreux nickel-cobalt, du molybdène, du titane et du nickel.

14. Pièce formant conducteur selon l'une quelconque des revendications 7 à 13,
dans laquelle l'âme conductrice (14) comprend un matériau sélectionné dans le groupe constitué de métaux tels que le cuivre, un alliage de cuivre, l'aluminium, un alliage ferreux nickel-cobalt et le molybdène.

15. Procédé selon la revendication 1, dans lequel l'étape de garniture au moyen de la première couche conductrice est une étape consistant à appliquer par placage, projection, dépôt en phase vapeur ou pulvérisation cathodique, la première couche conductrice (18) sur la section (20) de la surface interne (22) de la gaine isolante (16).
